# EUROPEAN PATENT APPLICATION

(11) **EP 3 683 437 A1**
(43) Date of publication of application: **22.07.2020**
(21) Application number: 19305070.5
(22) Date of filing: 18.01.2019
(51) Int. Cl.: F03B 11/04, F03B 3/12, F03B 17/06

(54) **HYDROTURBINE RUNNER BLADE LOCAL EXTENSION TO AVOID CAVITATION EROSION**

(71) Applicant: GE Renewable Technologies, 38100 Grenoble (FR)
(72) Inventor: BORNARD, Laurent, Saint-Ours Québec J0G 1P0 (CA); DEBEISSAT, Frédéric, Sorel-Tracy Québec J3P 6X1 (CA)
(74) Representative: Brevalex

(57) **Abstract**

The invention concerns a hydraulic turbine comprising a runner crown or a hub (1), possibly a band (2), and blades (3) fixed to said crown or hub, or between said band and said crown, and to be actuated in rotation around an axis of rotation, each blade comprising:
- a leading edge (8) and a trailing edge (10),
- at least one local extension (20) having a first contact surface fixed to the trailing edge of the blade (2), a second contact surface fixed to either said band (6) or said crown (4) and two lateral sides (24₁, 24₂) joining at a ridge line (22).

## Description

### TECHNICAL FIELD AND PRIOR ART

The invention relates to the field of hydropower industry.

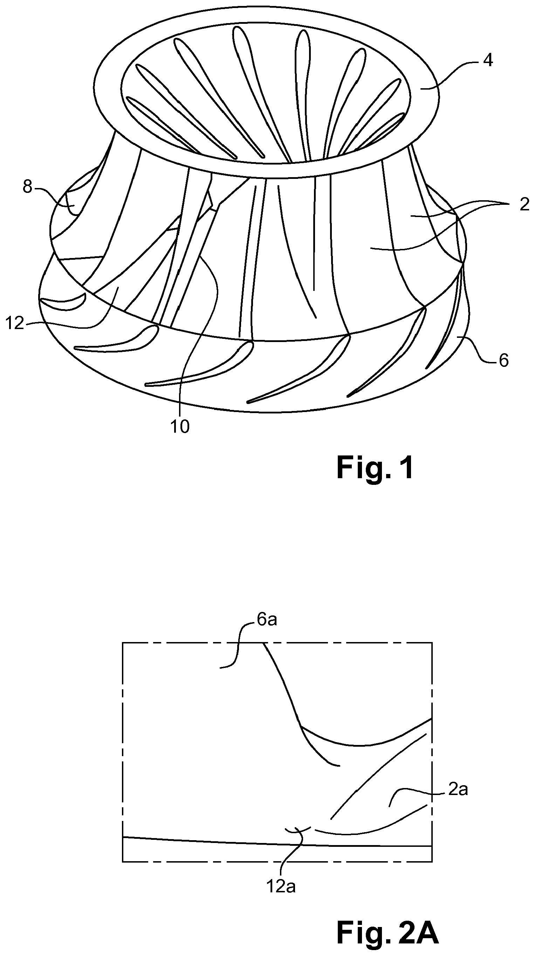

Figure 1 illustrates a known turbine runner, comprising runner blades 2 arranged between a crown 4 and a band 6. Each of these blades extends between a leading edge 8 and a trailing edge 10 from which water flows into a draft tube (not shown on figure 1). The present application applies not only to such turbines (Francis and others) and to turbine-pump runners possessing a crown and a band, but also to those with only a crown or a hub (propeller, or Kaplan, or diagonal flow and others).

Francis runner erosion is often observed in the blade-band (or blade-crown) fillet.

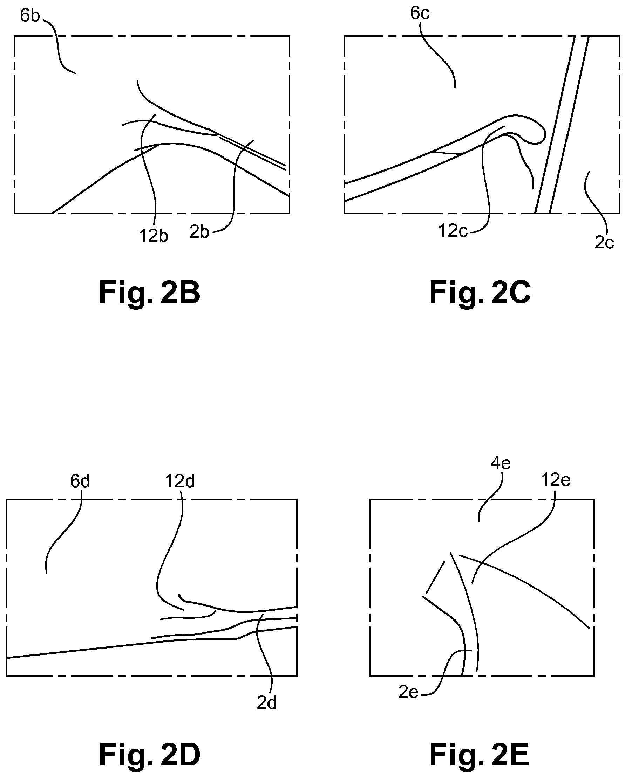

Figures 2A - 2E show examples of blade-band (figures 2A-2D) or blade-crown (figure 2E) assemblies, each figure showing a portion of a blade 2a-2e with a portion of a band 6a-6d (figures 2A-2D) or of a crown 4e ((figures 2E) comprising zones 12a-12e of erosion at the foot of the blade or in a zone between the blade and the band or the crown.

Each of these erosion zones is located in a critical area of stress peak. It is difficult to repair them at site without increasing residual stress and risking runner crack.

There is thus a problem of finding a method and/or a device to repair such zones.

### SUMMARY OF THE INVENTION

The invention first concerns a local blade extension for fixing to the trailing edge of a blade and to either the band or the crown or the hub of a hydraulic turbine, comprising:
- a first contact surface, for a contact with at least a trailing edge of said blade and a second contact surface, for a contact with at least said band or crown or hub;
- two lateral sides, joining at a sharp ridge line.

The sharp ridge line avoids or reduces the Von Karman vortices that are involved in the cavitation erosion.

A local blade extension according to the invention can comprise:
- at least in part an epoxy resin material or a composite or plastic material or glass fibers or carbon fibers, or carbon fibers mixed with an epoxy resin material;
- and/or a shell and an internal part, said shell comprising for example a stratified composite material.

The invention further concerns a hydraulic turbine comprising a runner crown or a hub, possibly a band and blades fixed to said crown or said hub, or between said band and said crown, and to be actuated in rotation around an axis of rotation, each blade comprising:
- a leading edge and a trailing edge,
- at least one local extension according to the invention, fixed to the trailing edge of the blade and either to the band or to the crown or to the hub.

The lateral sides of said at least one local extension preferably have a shape which follows the flow lines along said blade when the turbine is operated in water.

Said turbine is for example of the Francis or Kaplan or diagonal flow type or is a pump-turbine.

The invention also concerns a method for improving the performances of a hydraulic turbine comprising a runner crown or a hub, possibly a band, and blades fixed to said crown or hub, or between said band and said crown, and to be actuated in rotation around an axis of rotation, each blade comprising a leading edge and a trailing edge, said method comprising fixing at least one local extension according to the invention to the trailing edge of the blade and to either the band or the crown or the hub of said runner.

A method according to the invention can comprise fixing two local extensions to the trailing edge of each blade, one local extension being fixed to the band and the other one to the crown or the hub of said runner.

In a method according to the invention said turbine is for example of the Francis or Kaplan or diagonal flow type or is a pump-turbine.

### BRIEF DESCRIPTION OF THE FIGURES

- Figure 1 shows a known hydroelectric turbine runner,
- Figures 2A-2E are different views of blades and of erosion zones of each blade and/or of the crown or the band;
- Figure 3 shows an embodiment of a blade local extension according to the invention;
- Figures 4A-4B are different views of an embodiment of a local extension blade according to the invention;
- Figures 5A-5B are different views of another embodiment of a local extension blade according to the invention;
- Figure 6 shows a perspective view of the blade of figures 5A and 5B;
- Figures 7A-7B are different views of another embodiment of a local extension blade according to the invention;
- Figures 8 and 9 are views of examples of asymmetrical local extensions according to the invention;
- Figure 10 is an example of fluid numerical simulation of von Karman vortices.

### DETAILED DISCLOSURE OF EMBODIMENTS

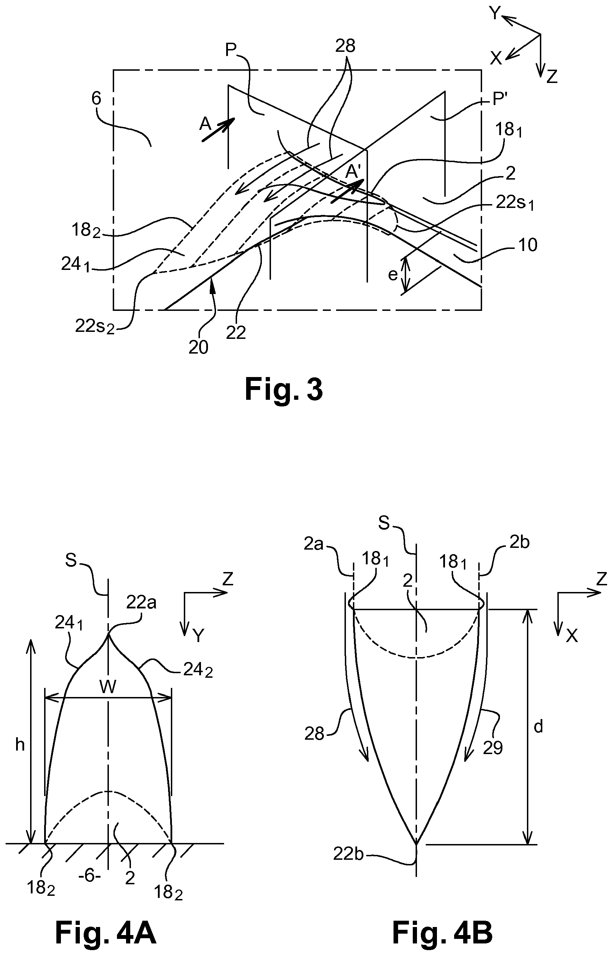

A first example of a blade local extension 20 according to the invention will be explained in connection with figures 3 and 4A, 4B.

This local extension has a first contact surface with the blade, delimited by a first line of contact 18₁ with the blade 2, close to its trailing edge 10 and a second contact surface with the runner band 6, and possibly with the band fillet (not shown of this figure), delimited by second line of contact 18₂. Both lines form together a contour or an outline of the local extension.

Instead of a squared shaped trailing edge whose thickness e (see figure 3) is of some milimeters, the local extension has a sharp trailing edge or trailing line 22 in order to avoid or reduce Von Karman vortices that are involved in the cavitation erosion; examples of this erosion are given on figures 2A-2E. The profile of the local extension according to the invention ends with this sharp trailing edge or line 22 having a thickness equal to 0 or comprised between 0 and 2 mm.

The local extension has two lateral sides 24₁, 24₂, joining at a ridge line 22. These two lateral sides 24₁, 24₂, have a shape which follows the flow lines 28, 29. Each of said lateral sides 24₁, 24₂, extends between a portion of the first line of contact 18₁, a portion of said second line of contact 18₂ and said trailing edge 22. The shape of the local extension, in particular said lateral sides and said ridge line, can be tested or measured and/or calculated in order to avoid or reduce Von Karman vortices.

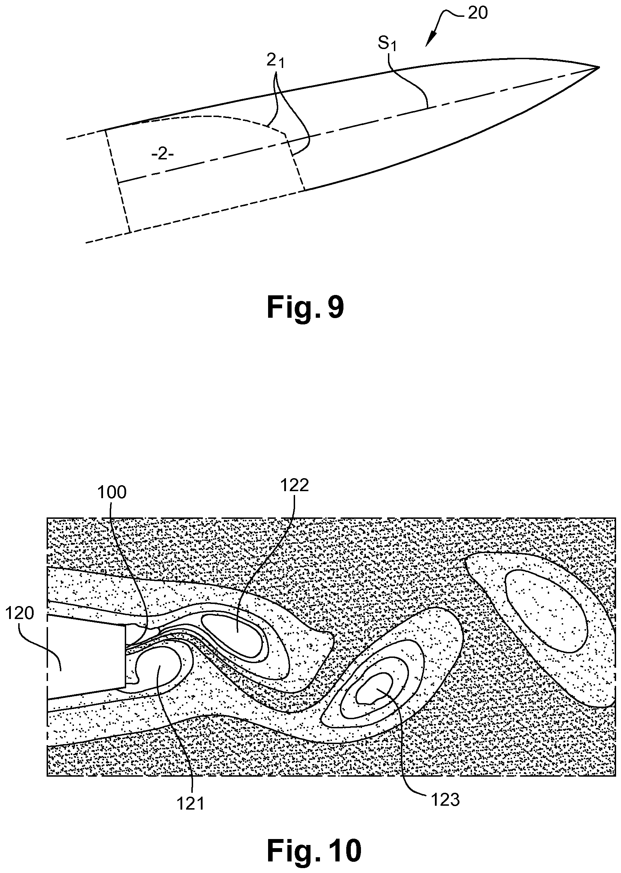

Von Karman vortices are generated by a fluid flowing along a profile having a trailing edge. When the fluid leaves said trailing edge, it turns into a wake that organizes itself into a series of vortices. These vortices are organized symmetrically along the profile axis. Figure 10 is an example of fluid numerical simulation of von Karman vortices 121, 122, 123 etc generated by a flow of fluid around a trailing edge 100 of a piece of material 120.

In the present application to hydraulic turbines, the inventors have evidenced that the amplitude of the von Karman vortices is linked to the thickness of the trailing edge 10 of the blade and that these vortices are reduced if the thickness of the trailing edge is reduced. Ultimately, if said thickness is smoothly reduced to 0, smoothly enough to avoid flow separation, no vortices appears.

To test a local blade extension according to the invention an experimental setup can be implemented and computer simulations (Computational fluid dynamics, CFD) can be performed as disclosed for example in P. Ausoni et al. in "Karman vortex shedding in the wake of a 2D hydrofoil: measurement and numerical simulation", IAHR Int. Meeting of WG on Cavitation and Dynamic Problems in Hydraulic Machinery and Systems, Barcelona, 28-30 June 2006; in particular, flow induced vibrations can be measured with help of an accelerometer and a laser vibrometer. It is thus possible to ensure that the von Karman phenomenon is reduced or has disappeared thanks to a local extension according to the invention. The shape of a local extension according to the invention can be adapted according to the above mentioned tests and simulations in order to reach the desired degree of reduction of von Karman phenomenon.

In the example of figures 3 and 4A, 4B, but also in the following other examples of a local extension according to the invention, there is a continuity between the hydraulic profile of the blade 2 and that of the local extension: there is no perturbation of a flow 28, 29 flowing along the blade and then along the local extension. As can be understood from figures 3 and 4B, water flows 28 and 29 can flow along the lateral sides 2a, 2b of the blade 2 and then along the lateral sides of the local extension 20 according to the invention without any perturbation.

The ridge line 22, from its top 22s₁ (against the blade 2) to its bottom 22s₂ (against the band 6) is curved. In some embodiments it has, starting from its top 22s₁, a concave shape and then, a convex shape which terminates at the bottom 22s₂. Alternatively, in this or in other embodiments, it can have, starting from its top 22s₁, a convex shape and then, a concave shape which terminates at the bottom 22s₂. As other possibility, it can have a concave shape from its top 22s₁ to its bottom 22s₂.

Figure 4A is a cross-sectional view of the local extension, along a plane P (see figure 3) roughly perpendicular to the surface of the band 6 and parallel to plane defined by the axis Y, Z; figure 4B is a cross-sectional view of the local extension, along a plane P' (see figure 3) roughly perpendicular to the surface of the blade, perpendicular to plane P and parallel to plane defined by the axis X, Z. On these figures, reference 22a, resp. 22b, is the intersection of ridge 22 with the corresponding cut plane P, resp. P'.

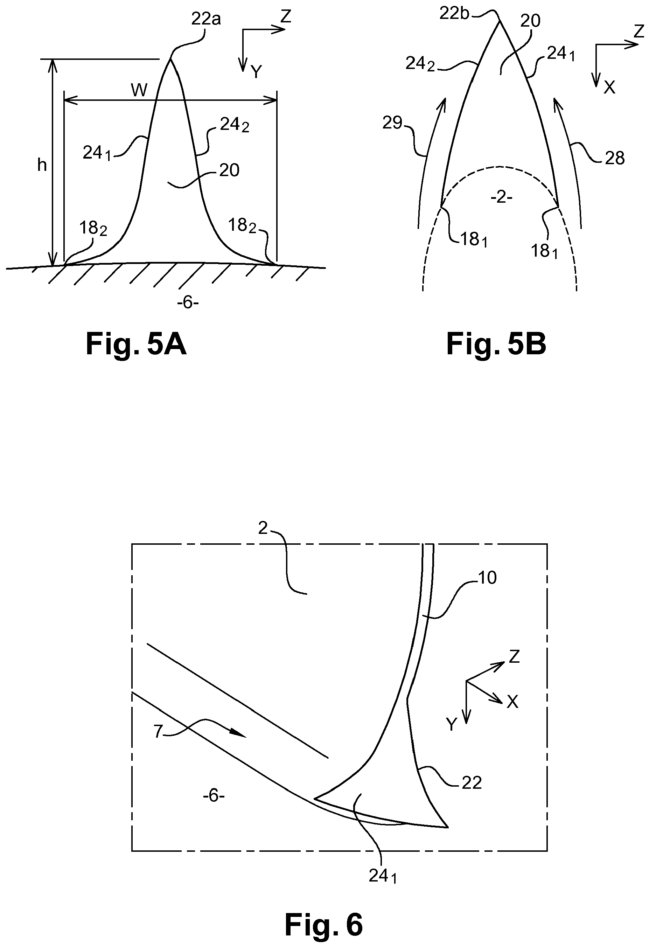

Figure 5A is a cross-sectional view of another local extension, also along a plane P (see figure 6) roughly perpendicular to the surface of the band 6 and parallel to plane defined by the axis Y, Z, figure 5B being a cross-sectional view of the local extension, along a plane P' (see figure 6) roughly perpendicular to the surface of the blade 2, perpendicular to plane P and parallel to plane defined by the axis X, Z. On these figures, 22a, 22b is the intersection of the ridge with the corresponding cut plane P, P'.

On each of figures 4A-5B the local extension 20:
- has two lateral sides 24₁, 24₂, joining at a ridge line 22; they have a shape which follows the flow lines 28, 29;
- has a first contact surface with the blade 2, delimited by a first line of contact 18₁ with the blade, close to its trailing edge 10 and a second contact surface with the runner band, delimited by second line of contact 18₂. Both lines form together a contour or an outline of the local extension.

Figure 6 is a perspective view of the local extension 20 (which has cross-sectional views along planes P and P' illustrated on figures 5A and 5B) after it has been fixed against blade 2 and against a blade to band (or blade to crown) fillet 7 and a band 6 (or a crown).

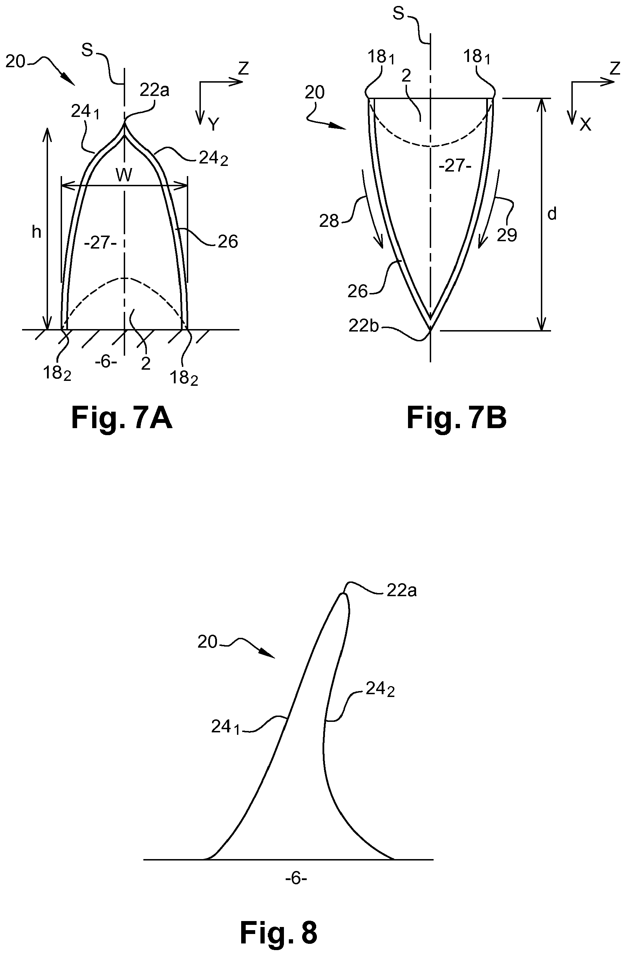

Figures 7A and 7B are a variant of the embodiment of figures 4A and 4B;the reference numbers on these figures 7A and 7B which are identical to those of figures 4A and 4B designate identical or similar technical elements: a local extension 20 according to the invention can comprise, or can be covered by, an outside shell 26, for example in a stratified composite material, and an internal part 27 which is for example in resin, for example epoxy resin, and which can be fixed to the blade and the band by gluing. Such an outside shell can also be applied to a local extension according to other embodiments (as illustrated on figures 5A and 5B or on figures 6, 8 and 9).

The local extension illustrated on the figures 3-7B have shapes which are symmetric with respect to a plane S perpendicular to both planes P and P' (see figure 3).

Alternatively, a local extension 20 according to the invention can also have an asymmetrical shape, as illustrated on figure 8 (which is a cross-sectional view along a cut plane P having the same orientation as on figure 3).

Another example of asymmetrical local extension 20 according to the invention is shown on figure 9, this extension being located on a blade 2 which has a contour 2₁ and is itself is asymmetrical with respect to a plane S₁.

A local extension according to the invention is fixed with respect to both the blade and the blade to band (or blade to crown) fillet and/or the band (or the crown). A deformation of the local extension is possible with respect to the blade or the runner band, preferably without applying a significant load to the band and/or to the blade.

For a runner of 6 m diameter, the local extension 20 has for example the following dimensions:
- a width w (measured along axis z, see figures 4A and 5A) between 10 mm (most distant plane from band/crown of device) and 20 cm ;
- a depth d (measured along axis x, see figures 4B and 5B) between 10 cm and 20 cm;
- a height h (measured along axis y, , see figures 4A and 5A) between 10 cm and 15 cm.

For runners with larger or smaller or larger diameters, these ranges can be adapted in a homothetic way.

A local extension 20 according to the invention can be made in resin, for example epoxy resin or in a composite or plastic material; other possible materials are glass fibers or carbon fibers mixed with an epoxy resin. All these materials allow a deformation of this local extension with respect to both the band and the blade; they also avoid any welding of the local extension on the band or crown and the blade. On figures 3 - 5B the local extension is represented joined to the blade and the band; however, preferably it is first fabricated and then fixed to the blade 2 and the band 6, for example by gluing. Although no view represents only the local extension without the blade and the band, this application should be understood as covering the local extension before it is assembled with the blade and the band.

A local extension according to the invention can be pre-shaped to have all the attributes normally achieved after securing it against the blade and the runner band.

It can be fabricated based on 3D printing technologies or additive techniques. It can then be assembled with the blade and the band and/or the band fillet.

The above description can be applied to a blade local extension 20 in contact with a crown.

One or more local extension(s) 20 as described above can be fixed, for example by gluing, to a blade and the crown (or the hub) or the band of an existing turbine runner, for example of the type disclosed above in connection with figure 1. This improves the performances of said turbine runner by reducing or eliminating the von Karman vortices and the resulting erosion described above in connection with figures 2A-2E.

## Claims

1. A hydraulic turbine comprising a runner crown or a hub (1), possibly a band (2), and blades (3) fixed to said crown or hub, or between said band and said crown or hub, and to be actuated in rotation around an axis of rotation, each blade comprising:
- a leading edge (8) and a trailing edge (10),
- at least one local extension (20) having a first contact surface fixed to the trailing edge of the blade (2), a second contact surface fixed to either said band (6) or said crown (4) and two lateral sides (24₁, 24₂) joining at a sharp ridge line (22).

2. A hydraulic turbine according to claim 5, each blade comprising two local extensions (20) each being fixed to the trailing edge of the blade, one local extension being fixed to the band and the other one to the crown or the hub of said runner.

3. A hydraulic turbine according to claim 1 or 2, the lateral sides (24₁, 24₂), of said at least one local extension (20) having a shape which follows the flow lines (28, 29) along said blade when said hydraulic turbine is operated in water.

4. A hydraulic turbine according to any of claims 1 to 3, wherein at least one local blade extension (20) comprises at least in part an epoxy resin material or a composite or plastic material or glass fibers or carbon fibers, or carbon fibers mixed with an epoxy resin material.

5. A hydraulic turbine according to any of claims 1 to 4, at least one local extension comprising a shell (26), and an internal part (28).

6. A hydraulic turbine according to claim 5, said shell (26) comprising a stratified composite material, and said internal part (28) comprising a resin material.

7. A hydraulic turbine according to any of claims 1 to 6, said turbine being of the Francis or Kaplan or diagonal flow type or being a pump-turbine.

8. A method for improving the performances of a hydraulic turbine comprising a runner crown or a hub (1), possibly a band (2), and blades (3) fixed to said crown or hub, or between said band or crown, and to be actuated in rotation around an axis of rotation, each blade comprising a leading edge (8) and a trailing edge (10), said method comprising fixing at least one local extension (20) to the trailing edge of the blade (2) via a first contact surface, and to either said crown (4) or hub (1), or to said band, via a second contact surface, said local extension (20) having two lateral sides (24₁, 24₂) joining at a ridge line (22).

9. A method according to claim 8, comprising fixing two local extensions (20) to the trailing edge of each blade, one local extension being fixed to the band and the other one to the crown or the hub of said runner.

10. A method according to claim 8 or 9, the lateral sides (24₁, 24₂), of said at least one local extension (20) having a shape which follows the flow lines (28, 29) along said blade when said hydraulic turbine is operated in water.

11. A method according to any of claims 8 to 10, wherein at least one local blade extension (20) comprises at least in part an epoxy resin material or a composite or plastic material or glass fibers or carbon fibers, or carbon fibers mixed with an epoxy resin material.

12. A method according to any of claims 8 to 11, at least one local extension comprising a shell (26), and an internal part (28).

13. A method according to claim 12, said shell (26) comprising a stratified composite material, and said internal part (28) comprising a resin material.

14. A method according to any of claims 8 to 13, said turbine being of the Francis or Kaplan or diagonal flow type or being a pump-turbine.
